# FASCICULE DE BREVET EUROPEEN

(11) **EP 0 848 853 B1**
(45) Date de publication et mention de la délivrance du brevet: **23.02.2000**
(21) Numéro de dépôt: 96930209.0
(22) Date de dépôt: 04.09.1996
(51) Int. Cl.: G21C 3/18

(54) **ELEMENT COMBUSTIBLE BRULEUR D'ACTINIDES**
BRENNSTAB ZUM ABBRENNEN VON AKTINIDEN
FUEL ELEMENT FOR BURNING ACTINIDES

(30) Priorité: 05.09.1995 FR 9510388
(43) Date de publication de la demande: 24.06.1998
(73) Titulaire: COMMISSARIAT A L'ENERGIE ATOMIQUE, 75015 Paris (FR)
(72) Inventeur: GARNIER, Jean-Claude, F-13100 Aix-en-Provence (FR); LANGUILLE, Alain, F-13100 Le Tholonet (FR); LO PINTO, Pierre, F-13490 Jouques (FR); ROUAULT, Jacques, F-84120 Pertuis (FR)
(74) Mandataire: Des Termes, Monique
(86) Numéro de dépôt international: FR9601354
(87) Numéro de publication internationale: WO9709721

(56) Documents cités:
- EP-A- 0 132 911
- DE-B- 1 084 394
- FR-A- 1 259 878
- FR-A- 2 633 434
- GB-A- 883 196
- GB-A- 2 116 354
- DATABASE WPI Week 7704 Derwent Publications Ltd., London, GB; AN 77-06276Y XP002017881 & JP,A,51 106 898 (HITACHI) , 17 Mars 1975
- PATENT ABSTRACTS OF JAPAN vol. 014, no. 554 (P-1140), 10 Décembre 1990 & JP,A,02 236197 (KOBE STEEL LTD), 19 Septembre 1990,

## Description

L'invention concerne un élément combustible brûleur d'actinides. Cet élément est destiné à être utilisé dans un réacteur nucléaire du type réacteur à neutrons rapides (RNR) ou réacteur à eau pressurisée (REP) afin d'"incinérer", c'est-à-dire soumettre à un flux de neutrons, des éléments radioactifs à vie longue pour les transformer en éléments radioactifs à vie plus courte. Par le terme "actinides" on couvre les actinides seuls ou associés à des produits de fission.

La production d'énergie par les centrales nucléaires et l'irradiation de combustibles nucléaires entraînent la formation de déchets radioactifs. Ces déchets sont classés en trois catégories :
- les déchets A, dits "à vie courte" dont la demi-vie ou période est inférieure à 30 ans et qui sont issus des hôpitaux, des laboratoires, des industries, des centrales nucléaires et du retraitement,
- les déchets B contenant des traces de déchets à vie longue, issus du retraitement, et
- les déchets C contenant des produits de fission et des émetteurs à vie longue dont la demi-vie est de quelques dizaines à quelques milliers d'années et qui sont issus du retraitement.

Actuellement en France, les combustibles nucléaires sont recyclés par des procédés chimiques dans les usines de retraitement telles que celle de la COGEMA à La Hague. Ces procédés chimiques permettent de séparer le plutonium et l'uranium, du reste des éléments radioactifs, par une réaction de complexation. L'uranium et le plutonium constituent la matière valorisable et représentent 97% des matières retraitées.

Le plutonium a la propriété d'être fissile par les neutrons et peut de ce fait être utilisé comme combustilbe nucléaire. Non recyclé, c'est un radioélément gênant du fait de sa période (24 000 ans pour l'isotope 239) et de sa radiotoxicité qui représente 15% de la nocivité des combustibles usés au déchargement et jusqu'à 98%, 10 000 ans plus tard.

Les déchets au sens propre du terme forment les 3% restant. Ils sont actuellement vitrifiés et seront stockés en profondeur dans des sites géologiques adaptés à cet effet. Parmi ces déchets se trouvent les éléments que sont les produits de fission à vie longue (iode¹²⁹, césium¹³⁵, technétium⁹⁹) et les actinides mineurs (neptunium²³⁷, américium²⁴¹ et ²⁴³) . La réduction de la radiotoxicité de ces déchets est à l'étude actuellement. Cela suppose la transmutation des éléments précités en éléments stables ou à durée de vie plus courte. Sur ce plan, les actinides mineurs présentent l'avantage de donner naissance, après une ou plusieurs captures neutroniques, à des éléments fissiles et peuvent de ce fait participer au processus de fission et de production d'énergie. Quant aux produits de fission à vie longue, une réduction de la radiotoxicité nécessite également leur transmutation.

La technique de l'incinération est donc intéressante à mettre en oeuvre pour traiter les éléments à vie longue de façon générale, les actinides et le plutonium en particulier.

Une première solution consiste à associer dans un réacteur, le ou les élément(s) à incinérer à un autre actinide tel que l'uranium, ou le thorium ou à un matériau inerte du type MgO, Al₂O₃, ou MgAl₂O₄. Plus précisément, le coeur d'un réacteur, est constitué d'assemblages verticaux de section hexagonale ou carrée. Chacun de ces assemblages comprend un faisceau d'aiguilles combustibles ou "éléments combustibles" contenant chacun un empilement de pastilles du matériau à base d'actinide. Le réfrigérant (sodium ou eau) circule autour de chaque élément combustible.

Cette solution présente des inconvénients. D'une part, l'association de l'actinide à incinérer avec un autre actinide rend l'incinération moins efficace puisqu'on génère à nouveau certains des produits que l'on souhaite transformer. C'est, par exemple le cas lorsque le plutonium est associé à l'uranium. En effet, l'uranium soumis à un flux de neutrons est progressivement converti en plutonium. D'autre part, l'addition d'éléments inertes accroît le volume des déchets contaminés et altère bien souvent les propriétés de l'actinide seul, puisque l'échange thermique entre l'actinide et le réfrigérant doit s'effectuer à travers le matériau inerte.

En conséquence, l'invention a pour but de mettre au point un élément combustible permettant de traiter un actinide pris isolément, sans matériau d'addition inerte ou à base d'actinide, tout en garantissant son intégrité mécanique tout au long de l'irradiation, ainsi que la possibilité de pouvoir le récupérer, après le passage dans le réacteur, pour un traitement ultérieur, (c'est-à-dire le conditionnement en vue du stockage ou la réutilisation dans un réacteur).

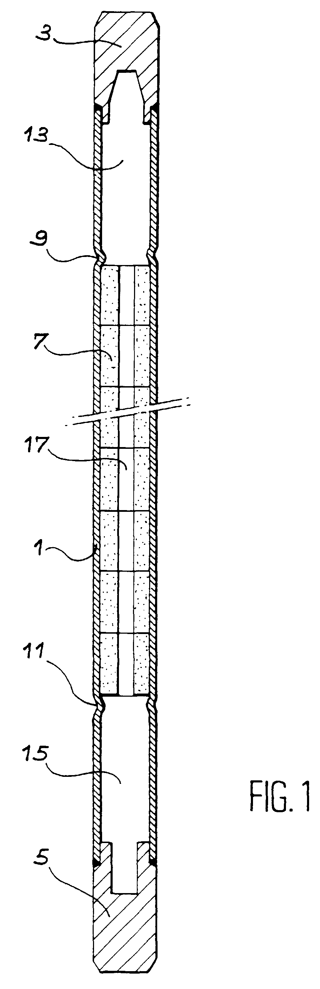

La structure classique d'un élément combustible est illustrée, pour mémoire, sur la figure 1 jointe. Dans la suite de la description, les termes "supérieur, inférieur, partie haute ou partie basse" sont considérés en faisant référence aux figures jointes et correspondent également aux différentes parties d'un réacteur. Cet élément combustible comprend une gaine externe tubulaire 1 munie à ses deux extrémités de deux bouchons 3 et 5 et contenant un empilement de pastilles de combustible 7. Ces pastilles 7 sont maintenues dans la partie centrale de la gaine externe 1 par deux sertissages 9 et 11 prévus dans la gaine externe et définissant une chambre d'expansion supérieure 13 et une chambre d'expansion inférieure 15. Les pastilles de combustible 7 sont généralement des pastilles frittées, élaborées par la métallurgie des poudres. Elles peuvent éventuellement être percées d'un trou central 17.

L'emploi de la technologie classique des éléments de combustible nucléaire pour la fabrication d'un élément combustible brûleur d'actinides obligerait, en raison de critères liés à la structure du réacteur et au taux de dilution, à utiliser :
- soit des pastilles présentant un diamètre de trou central exagérément grand par rapport au diamètre extérieur de la pastille, afin de réduire au niveau requis le volume d'actinides, pour un diamètre d'élément combustible donné,
- soit des pastilles pleines mais de très faible diamètre pour les mêmes raisons.

Dans le premier cas, la tenue mécanique du combustible serait insuffisante et sous l'action de l'irradiation et de la formation des produits de fission gazeux, les pastilles risqueraient de s'effriter, de s'effondrer dans la partie basse de l'élément combustible.

Dans le deuxième cas, le diamètre extérieur de la gaine externe serait alors beaucoup trop petit par rapport à l'encombrement d'un assemblage combustible nucléaire donné. Les échanges thermiques ne s'effectueraient pas correctement.

L'invention a pour but de résoudre ces problèmes et concerne un élément combustible brûleur d'actinides. L'élément combustible comprend une gaine externe tubulaire munie à ses deux extrémités d'un bouchon supérieur et d'un bouchon inférieur et une chemise interne tubulaire disposée à l'intérieur de ladite gaine externe, coaxialement à celle-ci de façon à définir d'une part, une cavité annulaire de réception de particules d'actinides, fermée à ses deux extrémités et d'autre part, un espace interne central, caractérisé en ce que cette chemise interne est réalisée dans un matériau perméable aux gaz formés lors de l'incinération et imperméable aux actinides et en ce que cette chemise interne s'étend sur une partie de la longueur de la gaine externe, de façon à définir au moins une chambre d'expansion, à l'une des extrémités de l'élément combustible, l'espace interne central débouchant dans ladite chambre d'expansion.

Grâce à la chemise interne, l'actinide est maintenu sans qu'il soit nécessaire de l'immobiliser dans un matériau inerte. Il peut donc être utilisé seul. Par ailleurs, sous l'action de l'irradiation, il ne risque pas de s'effondrer au centre de l'élément combustible, ni même de passer à travers la chemise interne puisque celle-ci est conçue pour être imperméable aux actinides.

Enfin, la chemise interne est réalisée dans un matériau permettant le transfert vers l'espace interne des gaz générés par l'incinération des actinides, tout en interdisant le passage du composé d'actinides vers ce même espace. De façon avantageuse, cette chemise interne est réalisée en alliage de zirconium, en céramique ou en acier ferritique ou austénitique ou tout autre matériau susceptible, outre les propriétés précitées, de résister à une irradiation à forte dose. Cette chemise interne est généralement frittée.

De façon avantageuse, les particules d'actinides sont des particules de nitrure tels que PuN, AmN, (PuAmU)N, de carbure tel que PuC, d'oxydes tels que PuO₂, (PuAmU)O₂, AmO₂ ou de leurs mélanges.

De préférence, la largeur de la cavité annulaire est inférieure ou égale à 1 mm environ. Ainsi, les échanges de chaleur entre le plutonium et le fluide réfrigérant circulant autour de la gaine externe sont facilités.

De préférence, le composé d'actinides est sous forme de particules, de préférence sphériques, dont le diamètre est compris entre 30 et 200 µm environ. Lors de la fabrication de l'élément combustible, l'emploi de billes sphériques permet d'assurer la fluidité du combustible pendant le remplissage de la cavité annulaire. De plus, des particules de combustible d'un diamètre supérieur à 200 µm risqueraient d'entraîner la formation de vides dans la cavité annulaire lors du remplissage, compte tenu de la largeur de celle-ci. Inversement, des particules d'un diamètre inférieur à 50 µm risqueraient de diminuer la porosité du combustible qui serait trop tassé et trop dense (quantité de combustible/unité de volume). Or, l'augmentation du taux de dilution est recherchée non seulement dans le coeur du réacteur et dans chaque assemblage d'éléments combustibles mais également dans chaque élément combustible pris isolément.

De façon avantageuse, l'élément combustible comprend une seule chambre d'expansion prévue dans sa partie inférieure. En effet, la partie inférieure de l'élément combustible est à une température plus basse que sa partie haute ; donc à pression constante, le fait de placer la chambre d'expansion dans la partie inférieure de l'élément permet de diminuer le volume de celle-ci.

Selon un premier mode de réalisation de l'invention, l'espace interne central est vide et peut servir uniquement à recueillir les gaz formés au cours de l'irradiation. Selon un deuxième mode de réalisation de l'invention, il contient au moins un matériau inerte, un matériau absorbant ou un matériau modérateur. Le matériau modérateur permet d'optimiser les caractéristiques de sûreté du réacteur par action sur le spectre neutronique, les matériaux absorbants et/ou poisons consommables permettent éventuellement d'augmenter le temps de séjour du combustible dans le réacteur et les matériaux inertes ont pour but de diluer la matière fissile en cas d'hypothétiques accidents de fusion du combustible ou du coeur. Les matériaux absorbants sont par exemple l'erbium, le gadolinium ou le carbure de bore. Les matériaux inertes sont par exemple des oxydes tels que MgO, Al₂O₃ ou MgAl₂O₄.

L'invention sera mieux comprise à la lecture de la description suivante d'un mode particulier de réalisation de l'invention, donné à titre illustratif et non limitatif, cette description étant faite en faisant référence aux dessins joints, dans lesquels :
- la figure 1 est une vue en coupe d'un élément combustible de l'art antérieur ne permettant pas de brûler de façon significative des actinides,
- la figure 2 est une vue en coupe longitudinale d'un élément combustible brûleur d'actinides selon l'invention appliquée à un réacteur à neutrons rapides pour un élément combustible brûleur de plutonium, et
- les figures 3 et 4 sont des vues en coupe, de détails de la figure 2.

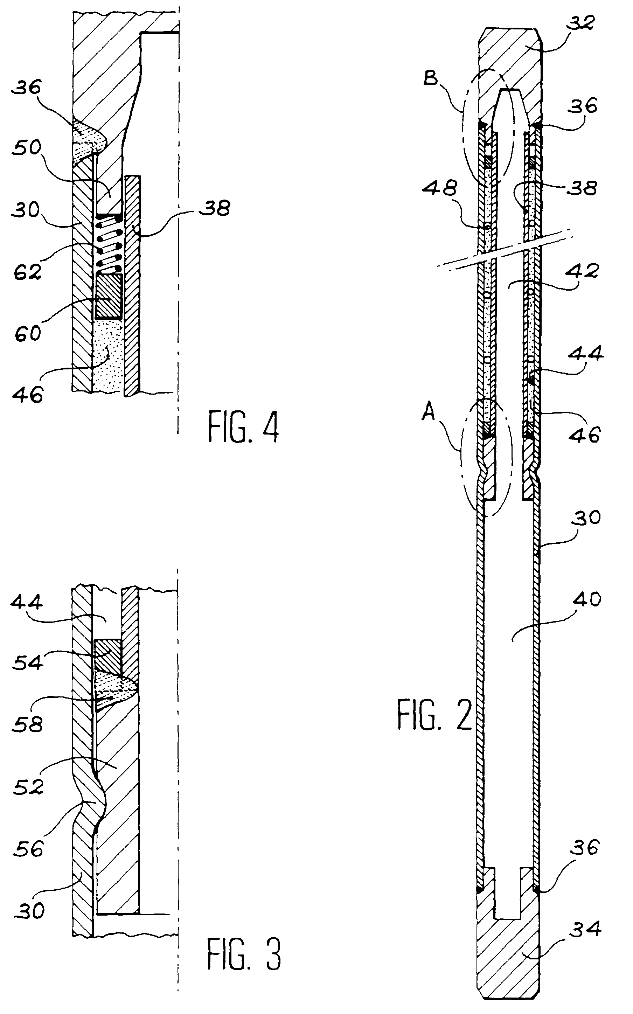

Comme illustré en figure 2, l'élément combustible brûleur d'actinides selon l'invention comprend une gaine externe tubulaire 30 obturée à ses deux extrémités par un bouchon supérieur 32 et un bouchon inférieur 34 soudés en 36 sur ladite gaine. L'élément combustible comprend également une chemise interne tubulaire 38, disposée à l'intérieur de la gaine externe 30, coaxialement à celle-ci. Cette chemise interne 38 s'étend sur au moins une partie de la longueur de la gaine extérieure 30 et de préférence uniquement sur une partie de la longueur de la gaine 30, de façon à définir une chambre d'expansion 40.

Sur la figure 2, cette chambre d'expansion est située dans la partie inférieure de l'élément combustible. Elle pourrait inversement être prévue dans la partie supérieure de cet élément. Enfin, selon une autre variante de réalisation, la chemise interne 38 pourrait occuper une position centrale, de façon à définir une chambre d'expansion supérieure et une chambre d'expansion inférieure, aux deux extrémités de l'élément combustible.

La chemise interne tubulaire 38 définit dans sa partie centrale un espace interne central 42 et forme avec la gaine externe 30, une cavité annulaire 44 de réception des particules d'actinides 46 à incinérer.

Une entretoise 48 est disposée entre la gaine externe 30 et la chemise interne 38. Cette entretoise 48 peut être constituée par un fil hélicoïdal ou par plusieurs bagues cylindriques réparties sur la hauteur de la cavité annulaire 44. Cette entretoise permet de maintenir un jeu constant entre la gaine externe et la chemise interne pendant l'irradiation et d'éviter ainsi les déformations structurelles. L'espace interne central 42 joue le rôle d'un volume d'expansion additionnel à celui de la chambre d'expansion 40, conçu pour limiter la pression interne des gaz de fission à l'intérieur de l'élément combustible.

La gaine externe 30 a pour rôle d'éviter le contact entre le composé d'actinides 46 et le fluide de refroidissement se trouvant à l'extérieur de ladite gaine. Cette gaine peut être réalisée, de façon avantageuse, en alliage de zirconium ou en acier ferritique ou austénitique ou tout autre matériau se déformant peu sous une irradiation à forte dose.

La cavité annulaire 44 est fermée à ses deux extrémités. Selon un mode particulier de réalisation de l'invention, ce bouchage est effectué, comme illustré sur les figures 3 et 4, à une extrémité par une saillie annulaire 50 du bouchon supérieur 32 dont les dimensions sont conçues pour correspondre à l'écartement entre la gaine externe 30 et la chemise interne 38 et à l'autre extrémité, par un bouchon intermédiaire 52 annulaire et par une bague d'obturation 54 également annulaire. Le bouchon intermédiaire 52 est serti sur la gaine externe 30 (voir référence 56), tandis que la bague d'obturation 54 disposée dans la partie inférieure de la cavité annulaire 44 est soudée à la gaine externe 30, à la chemise interne 38 et au bouchon intermédiaire 52. Cette soudure porte la référence 58.

Les particules d'actinides 46 occupent le volume de la cavité annulaire 44. Ces particules sont maintenues à l'intérieur de ladite cavité par une bague annulaire 60 montée sur un ressort 62 dont l'autre extrémité est fixée sur la saillie annulaire 50 du bouchon supérieur 32. Ceci permet de maintenir les particules d'actinides 46 durant le transport de l'élément combustible.

A titre d'exemple, un élément combustible selon l'invention peut présenter les dimensions suivantes :

| | |
|---|---|
| diamètre externe de la gaine externe 30 | 6,35 mm |
| diamètre interne de la gaine externe 30 | 5,55 mm |
| diamètre externe de la chemise interne 38 | 4 mm |
| diamètre interne de la chemise interne 38 | 3,6 mm |
| hauteur de la cavité annulaire 44 | environ 1 m |
| hauteur de la chambre d'expansion 40 | environ 1 m |

## Revendications

1. Elément combustible brûleur d'actinides, qui comprend une gaine externe tubulaire (30), munie à ses deux extrémités d'un bouchon supérieur (32) et d'un bouchon inférieur (34) et une chemise interne tubulaire (38) disposée à l'intérieur de ladite gaine externe (30), coaxialement à celle-ci, de façon à définir d'une part, une cavité annulaire (44) de réception de particules d'actinides (46) à incinérer, fermée à ses deux extrémités et d'autre part, un espace interne central (42), caractérisé en ce que cette chemise interne (38) est réalisée dans un matériau perméable aux gaz formés lors de l'incinération et imperméable aux actinides et en ce que cette chemise interne s'étend sur une partie de la longueur de la gaine externe (30), de façon à définir au moins une chambre d'expansion (40) à l'une des extrémités de l'élément combustible, l'espace interne central (42) débouchant dans ladite chambre d'expansion (40).

2. Elément combustible brûleur d'actinides selon la revendication 1, caractérisé en ce que la largeur àe la cavité annulaire (44) est inférieure ou égale à 1 mm environ.

3. Elément combustible brûleur d'actinides selon la revendication 1, caractérisé en ce que la gaine externe (30) est réalisée en acier ferritique, en acier austénique ou en alliage de zirconium.

4. Elément combustible brûleur d'actinides selon la revendication 1, caractérisé en ce que la chemise interne (38) est réalisée en acier ferritique ou austénique, en alliage de zirconium ou en céramique.

5. Elément combustible brûleur d'actinides selon la revendication 1, caractérisé en ce que les particules d'actinides (46) sont de préférence sphériques, et ont une dimension comprise entre 30 et 200 µm environ.

6. Elément combustible brûleur d'actinides selon la revendication 1, caractérisé en ce que les particules d'actinides (46) sont des particules d'oxydes, de carbure, de nitrure ou de leurs mélanges.

7. Elément combustible brûleur d'actinides selon la revendication 1, caractérisé en ce que l'espace interne central (42) contient au moins un matériau inerte, un matériau absorbant ou un matériau modérateur.

8. Elément combustible brûleur d'actinides selon la revendication 1, caractérisé en ce qu'une entretoise (48) est placée entre la gaine externe (30) et la chemise interne (38).

9. Elément combustible brûleur d'actinides selon la revendication 1, caractérisé en ce que les particules d'actinides (46) occupent le volume de la cavité annulaire (44) et sont maintenues par une bague annulaire (60) montée sur un ressort (62).

10. Elément combustible brûleur d'actinides selon la revendication 1, caractérisé en ce qu'il comprend une seule chambre d'expansion (40) prévue dans sa partie inférieure.

## Patentansprüche

1. Brennelement zum Verbrennen von Actiniden, welches eine rohrförmige äußere Hülle (30), die an ihren beiden Enden mit einem oberen Stopfen (32) und mit einem unteren Stopfen (34) versehen ist, und einen rohrförmigen inneren Mantel (38), der im Innern der genannten äußeren Hülle (30) koaxial zu dieser angeordnet ist, umfaßt, so daß einerseits ein ringförmiger, an seinen beiden Enden geschlossener Hohlraum (44) zur Aufnahme von zu verbrennenden Actinidenpartikeln (46), andererseits ein zentraler innerer Raum (42) definiert wird, dadurch gekennzeichnet, daß dieser innere Mantel (38) aus einem Material hergestellt ist, das durchlässig für die bei der Verbrennung gebildeten Gase und undurchlässig für die Actiniden ist, und daß dieser innere Mantel sich über einen Teil der Länge der äußeren Hülle (30) erstreckt, so daß mindestens eine Ausdehnungskammer (40) am einen Ende des Brennelements definiert wird, wobei der zentrale innere Raum (42) in die genannte Ausdehnungskammer (40) mündet.

2. Brennelement zum Verbrennen von Actiniden nach Anspruch 1, dadurch gekennzeichnet, daß die Dicke des ringförmigen Hohlraums (44) kleiner als oder gleich ungefähr 1 mm ist.

3. Brennelement zum Verbrennen von Actiniden nach Anspruch 1, dadurch gekennzeichnet, daß die äußere Hülle (30) aus ferritischem Stahl, aus austenitischem Stahl oder aus einer Zirconiumlegierung hergestellt ist.

4. Brennelement zum Verbrennen von Actiniden nach Anspruch 1, dadurch gekennzeichnet, daß der innere Mantel (38) aus ferritischem oder austenitischem Stahl, aus einer Zirconiumlegierung oder aus Keramik hergestellt ist.

5. Brennelement zum Verbrennen von Actiniden nach Anspruch 1, dadurch gekennzeichnet, daß die Actinidenpartikeln (46) vorzugsweise kugelförmig sind und eine Dimension haben, die ungefähr zwischen 30 und 200 µm liegt.

6. Brennelement zum Verbrennen von Actiniden nach Anspruch 1, dadurch gekennzeichnet, daß die Actinidenpartikeln (46) Partikeln von Oxiden, von Carbid, von Nitrid oder von ihren Mischungen sind.

7. Brennelement zum Verbrennen von Actiniden nach Anspruch 1, dadurch gekennzeichnet, daß der zentrale innere Raum (42) wenigstens ein inertes Material, ein absorbierendes Material oder ein Moderatormaterial enthält.

8. Brennelement zum Verbrennen von Actiniden nach Anspruch 1, dadurch gekennzeichnet, daß eine Unterlegscheibe (48) zwischen der äußeren Hülle (30) und dem inneren Mantel (38) angeordnet ist.

9. Brennelement zum Verbrennen von Actiniden nach Anspruch 1, dadurch gekennzeichnet, daß die Actinidenpartikeln (46) das Volumen des ringförmigen Hohlraums (44) einnehmen und durch einen auf einer Feder (62) montierten Ring (60) gehalten werden.

10. Brennelement zum Verbrennen von Actiniden nach Anspruch 1, dadurch gekennzeichnet, daß es eine einzige Ausdehnungskammer (40) enthält, die an seinem unteren Teil vorgesehen ist.

## Claims

1. Actinide burning fuel element, which comprises a tubular outer jacket (30), provided at its two ends with an upper plug (32) and a lower plug (34), and a tubular inner sleeve (38) located within said outer jacket (30) and coaxial thereto, so as to define on the one hand an annular cavity (44) for receiving the actinide particles (46) to be incinerated, sealed at its two ends, and on the other hand a central inner space (42), characterized in that said inner sleeve (38) is made from a material permeable to the gases formed during incineration and impermeable to actinides and in that said inner sleeve extends over part of the length of the outer jacket (30), so as to define at least one expansion chamber (40) at one of the ends of the fuel element, the central space (42) issuing into said expansion chamber (40).

2. Actinide burning fuel element according to claim 1, characterized in that the width of the annular cavity (44) is equal to or less than approximately 1 mm.

3. Actinide burning fuel element according to claim 1, characterized in that the outer jacket (30) is made from ferritic steel, stainless steel or zirconium alloy.

4. Actinide burning fuel element according to claim 1, characterized in that the inner sleeve (38) is made from ferritic or austenitic steel, zirconium alloy or ceramic.

5. Actinide burning fuel element according to claim 1, characterized in that the actinide particles (46) are preferably spherical and have a size between approximately 30 and 200 µm.

6. Actinide burning fuel element according to claim 1, characterized in that the actinide particles (46) are particles of oxides, carbide, nitride or mixtures thereof.

7. Actinide burning fuel element according to claim 1, characterized in that the central inner space (42) contains at least one inert material, absorbing material or moderating material.

8. Actinide burning fuel element according to claim 1, characterized in that a spacer (48) is placed between the outer jacket (30) and the inner sleeve (38).

9. Actinide burning fuel element according to claim 1, characterized in that the actinide particles (46) occupy the volume of the annular cavity (44) and are maintained by an annular ring (60) mounted on a spring (62).

10. Actinide burning fuel element according to claim 1, characterized in that it comprises a single expansion chamber (40) provided in its lower part.
